# EUROPEAN PATENT APPLICATION

(11) **EP 4 671 211 A1**
(43) Date of publication of application: **31.12.2025**
(21) Application number: 24760579.3
(22) Date of filing: 21.02.2024
(51) Int. Cl.: C01G 53/00, H01M 4/525, H01M 4/505, H01M 10/052

(54) **METHOD OF PREPARING PRECURSOR FOR LITHIUM SECONDARY BATTERY**

(30) Priority: 22.02.2023 KR 20230023513
(71) Applicant: Posco Future M Co., Ltd., Pohang-si, Gyeongsangbuk-do 37918 (KR)
(72) Inventor: CHOI, Seung Un, Gumi-si, Gyeongsangbuk-do 39171 (KR); LEE, Chang Hyun, Gumi-si, Gyeongsangbuk-do 39171 (KR); NAM, Gyeong Won, Gumi-si, Gyeongsangbuk-do 39171 (KR); JUNG, Kwang Eun, Gumi-si, Gyeongsangbuk-do 39171 (KR); JEUNG, Do Gak, Gumi-si, Gyeongsangbuk-do 39171 (KR); PARK, Jun Young, Gumi-si, Gyeongsangbuk-do 39171 (KR); LEE, Dong Young, Gumi-si, Gyeongsangbuk-do 39171 (KR); JANG, Hyun Seok, Gumi-si, Gyeongsangbuk-do 39171 (KR); KIM, Jeong Han, Gumi-si, Gyeongsangbuk-do 39171 (KR)
(74) Representative: Meissner Bolte Partnerschaft mbB
(86) International application number: PCT/KR2024/002282
(87) International publication number: WO 2024/177390

(57) **Abstract**

Provided is a method for manufacturing a precursor for a lithium secondary battery, the method comprising: preparing a metal raw material; and forming a reaction solution comprising the metal raw material to coprecipitate a metal hydroxide precursor, wherein the reaction solution further comprises an additional additive, and the additive comprises a colloidal flocculant.

## Description

### [FIELD OF THE INVENTION]

The present invention relates to a method for manufacturing a precursor for a lithium secondary battery.

### [BACKGROUND]

With the development of technology and the increasing demand for electric vehicles, the demand for secondary batteries as an energy source has been rapidly increasing. Among such secondary batteries, lithium secondary batteries, which have high energy density and voltage, long cycle life, and low self-discharge rate, have been commercialized and are widely used.

As the positive electrode active material of lithium secondary batteries, lithium nickel cobalt manganese composite oxides are used, and among the constituent elements, cobalt provides a high operating voltage and influences rate characteristics.

However, positive electrode active materials with a high cobalt composition are expensive, which limits their use in large quantities as a power source in fields such as electric vehicles. In addition, due to the recent sharp increase in cobalt prices, there has been a trend to gradually reduce the cobalt content, thereby creating a need for solutions that can compensate for rate characteristics and lifespan. One such approach is the use of positive electrode active materials having orientation as an alternative.

Conventionally, gradient concentration precursors have mainly been used to produce positive electrode active materials having an oriented structure; however, positive electrode active materials produced in this manner could not achieve complete orientation from the interior to the surface of the particles. Furthermore, implementing this approach requires complex processes, resulting in low economic efficiency and difficulty in quality control.

### [TECHNICAL PROBLEM]

The present invention can provide a uniformly grown precursor by applying a colloidal flocculant. Such a precursor enables the manufacture of an oriented positive electrode active material having high orientation, while ensuring economic efficiency.

### [TECHNICAL SOLUTION]

In one embodiment of the present invention, there is provided a method for manufacturing a precursor for a lithium secondary battery, the method comprising: preparing a metal raw material; and forming a reaction solution comprising the metal raw material to coprecipitate a metal hydroxide precursor, wherein the reaction solution further comprises an additional additive, and the additive comprises a colloidal flocculant.

The precursor obtained according to the manufacturing method may have lithium migration paths formed radially from the particle center to exhibit orientation.

In the step of preparing the metal raw material, the reaction may be carried out using a single metal raw material without separately preparing a core metal raw material and a shell metal raw material.

The method may further comprise, after the step of forming a reaction solution comprising the metal raw material to coprecipitate a metal hydroxide precursor, separating the obtained precursor from waste liquid, wherein the separated waste liquid is used in place of the additive.

The method may further comprise, after the step of forming a reaction solution comprising the metal raw material to coprecipitate a metal hydroxide precursor, separating the obtained precursor from waste liquid, wherein the separated waste liquid is introduced into the coprecipitation reaction together with the additional additive.

The waste liquid may comprise Na₂SO₄.

The colloidal flocculant may comprise an inorganic salt having a valence of 1 to 3.

The colloidal flocculant may comprise sodium nitrate, potassium nitrate, ammonium nitrate, sodium sulfate, sodium pyrosulfate, potassium pyrosulfate, ammonium pyrosulfate, potassium sulfate, ammonium sulfate, sodium phosphate, potassium phosphate, ammonium phosphate, sodium pyrophosphate, potassium pyrophosphate, ammonium pyrophosphate, or a combination thereof.

The colloidal flocculant may reduce the surface charge of nuclei generated during the coprecipitation reaction to cause particle agglomeration.

The manufactured precursor may be a layered precursor comprising nickel, manganese, and cobalt.

### [ADVANTAGEOUS EFFECTS]

The present invention relates to a precursor for a lithium secondary battery having an oriented structure and a positive electrode active material manufactured using the same, and more particularly, to a method for manufacturing an oriented precursor for a lithium secondary battery which, by virtue of having an oriented structure, exhibits long lifespan and high capacity characteristics.

The precursor for a lithium secondary battery according to the present invention is in the form of particles having an oriented structure from the interior to the exterior of the particles, thereby reducing the migration resistance of lithium ions and enabling the manufacture of a secondary battery having high output and long lifespan characteristics.

### [BRIEF DESCRIPTION OF THE DRAWINGS]

FIG. 1 is a schematic diagram illustrating the principle of controlling the degree of aggregation through zeta potential control in a comparative example of an embodiment of the present disclosure.
FIG. 2 is a schematic diagram of the structure of a reactor for manufacturing a conventional core-shell structured precursor and the structure of a reactor according to an embodiment of the present disclosure.
FIG. 3 is an SEM image of positive electrode active material precursors manufactured according to a comparative example and Examples 1 and 2.
FIGS. 4 to 7 show the results of electrochemical property evaluations of positive electrode active materials manufactured according to the comparative example and Examples 1 and 2.

### [DETAILED DESCRIPTION OF THE EMBODIMENTS]

Hereinafter, embodiments of the present invention will be described in detail. However, these are presented by way of example only, and the present invention is not limited thereto, but is defined only by the scope of the claims set forth below.

In general, precursor synthesis is carried out in a highly alkaline region, and due to the coordination bonding characteristics of transition metals, the range of available additives is very limited and not well known. In the present invention, an additive capable of controlling particle aggregation through zeta potential control was developed and applied to the precursor manufacturing method. As a result, oriented precursors and active materials can be manufactured by a method that has never been attempted before.

In general, the surface of a precursor carries a negative charge in an aqueous solution due to OH⁻ ions, which is referred to as the zeta potential. The compressed stern layer of the precursor moves together with the precursor, whereas the diffused layer moves with the aqueous solution. In particle dispersion within an aqueous solution, the zeta potential plays an absolute role.

Specifically, the larger the surface charge, the greater the repulsive force between particles, resulting in particle dispersion. Conversely, the smaller the surface charge, the lower the repulsive force between particles, resulting in aggregation.

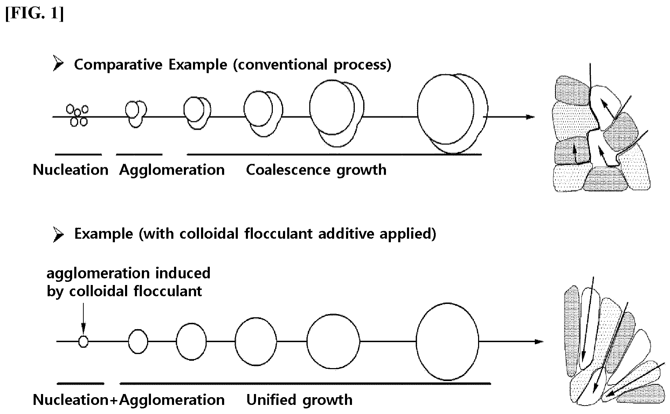

FIG. 1 is a schematic diagram illustrating the principle of controlling the degree of aggregation through zeta potential control in a comparative example of an embodiment of the present disclosure.

That is, the present invention can obtain a uniformly grown precursor in which crystal planes are uniformly grown from the interior to the exterior of secondary particles formed of aggregated primary particles, and this effect is derived from the function of the additive used in the coprecipitation step.

In one embodiment of the present invention, there is provided a method for manufacturing a precursor for a lithium secondary battery, the method comprising: preparing a metal raw material; and forming a reaction solution comprising the metal raw material to coprecipitate a metal hydroxide precursor, wherein the reaction solution further comprises an additional additive, and the additive comprises a colloidal flocculant.

More specifically, the embodiment may comprise: preparing a reaction mother liquor; preparing a metal raw material; and introducing the metal raw material into the reaction mother liquor to form a reaction solution and coprecipitate a metal hydroxide precursor, wherein the reaction solution further comprises an additional additive, and the additive comprises a colloidal flocculant. In this case, the additive may be introduced into the reaction mother liquor in the step of preparing the reaction mother liquor.

As described above, in the precursor manufacturing method according to one embodiment of the present disclosure, an additive comprising a colloidal flocculant for reducing the particle surface zeta potential can be used in the coprecipitation reaction. More specifically, the colloidal flocculant may be an ionically bound inorganic salt.

As a result, uniform seeds can be formed due to aggregation of nuclei at the initial stage of the coprecipitation reaction, and a uniformly grown precursor can be manufactured based on the formed seeds.

The precursor obtained according to the manufacturing method may have lithium migration paths formed radially from the particle center, thereby exhibiting orientation. This may be interpreted to mean that the c-axis, which is the lithium migration path, is oriented from the center to the outer periphery. Accordingly, the lithium migration resistance can be reduced, thereby improving the output and lifespan characteristics of the battery.

In addition, the precursor obtained according to the manufacturing method may be a secondary particle formed by aggregation of a plurality of primary particles, and the primary particles may have a plate-like, needle-like, or amorphous particle shape, but are not necessarily limited thereto.

In the step of preparing the metal raw material, the reaction may be carried out using a single metal raw material without separately preparing a core metal raw material and a shell metal raw material. Unlike the prior art, this enables bulk-type precursors to also have orientation.

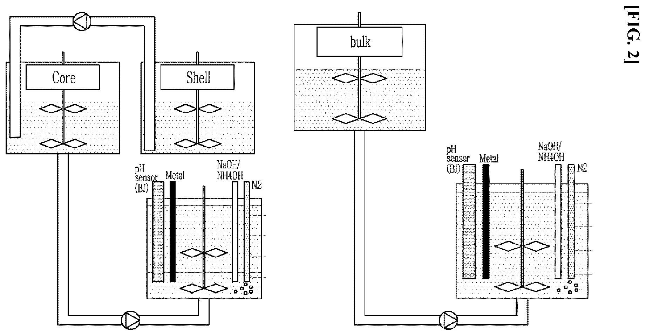

FIG. 2 is a schematic diagram showing the structure of a reactor for manufacturing a conventional core-shell structured precursor and the structure of a reactor according to an embodiment of the present disclosure.

In the related art, in order to obtain orientation, it was necessary to manufacture precursor particles by varying the metal composition of the core and the metal composition of the shell. However, in the precursor manufacturing method employing the additive of the present disclosure, orientation can be achieved without a metal concentration gradient, enabling the manufacture of the precursor in bulk form, thereby providing a price competitiveness advantage.

The method may comprise, after the step of forming a reaction solution comprising the metal raw material to coprecipitate a metal hydroxide precursor, separating the obtained precursor from waste liquid, wherein the separated waste liquid is used in place of the additive.

Alternatively, the method may comprise, after the step of forming a reaction solution comprising the metal raw material to coprecipitate a metal hydroxide precursor, separating the obtained precursor from waste liquid, wherein the separated waste liquid is introduced into the coprecipitation reaction together with the additional additive.

The waste liquid may comprise Na₂SO₄. The colloidal flocculant may comprise an inorganic salt having a valence of 1 to 3.

More specifically, even in wastewater after the reaction is complete, by-products such as sodium sulfate in an amount of about 10% by weight may be present. Recycling such wastewater can produce an effect similar to the application of an inorganic salt additive, thus providing an advantage in terms of price competitiveness.

More specifically, the colloidal flocculant may be an inorganic salt, and examples include sodium nitrate, potassium nitrate, ammonium nitrate, sodium sulfate, sodium pyrosulfate, potassium pyrosulfate, ammonium pyrosulfate, potassium sulfate, ammonium sulfate, sodium phosphate, potassium phosphate, ammonium phosphate, sodium pyrophosphate, potassium pyrophosphate, ammonium pyrophosphate, or a combination thereof.

As mentioned above, the colloidal flocculant may be added in the step of preparing the reaction mother liquor prior to the coprecipitation reaction, by introducing the colloidal flocculant into the reaction mother liquor.

The reaction mother liquor may include water, distilled water, deionized water, or a combination thereof, but is not necessarily limited thereto.

The colloidal flocculant may be added in an amount of 3 to 15% by weight, and more specifically, in an amount of 4 to 12% by weight, based on the total weight of the reaction mother liquor. When the amount of the colloidal flocculant satisfies the above range, the aforementioned improvement in precursor orientation and the resulting improvement in battery performance can be more desirably achieved.

Preferred embodiments and comparative examples of the present invention will be described below. However, these embodiments are merely preferred examples of the present invention and are not intended to limit the scope of the invention.

### Examples and Comparative Example

### Example 1: Use of 5% Sodium Sulfate Additive

(Preparation of Reaction Mother Liquor) Water was charged into a 100 L batch reactor in an amount corresponding to 15% of the total reactor volume, and sodium sulfate was introduced into the reactor in an amount of 5 parts by weight per 100 parts by weight of water. While stirring at a speed of 400 rpm, the internal temperature was set to 30-50 °C, and nitrogen gas was introduced into the reactor to establish an inert atmosphere.

(Preparation of Raw Materials) Subsequently, a 2.5 M aqueous metal sulfate solution containing nickel sulfate, cobalt sulfate, and manganese sulfate mixed at a molar ratio of 0.88:0.05:0.07, a 25% sodium hydroxide solution, and a 28% ammonia solution were prepared.

(Formation of Reaction Solution and Coprecipitation Reaction) The flow rate of the metal sulfate solution was adjusted to 3 L/h, and the flow rate of the ammonia solution was adjusted to 0.04 times the flow rate of the metal sulfate solution. The amount of sodium hydroxide (NaOH) solution fed into the reactor was controlled so that the hydrogen ion concentration (pH) in the reactor was maintained at about 10.5-11.5, thereby forming a reaction solution and performing a coprecipitation reaction. During the reaction, the stirring speed was maintained at 400 rpm, the average residence time of the total solution was set to 20 hours, the reaction temperature was maintained at 30-50 °C, and nitrogen gas was introduced to maintain an inert atmosphere.

(Washing and Drying) After the reaction was completed, the resulting slurry was washed and subjected to solid-liquid separation using a filter press, and residual moisture was removed using high-pressure fresh air. The separated solids were dried using a fluidized bed dryer at 100-200 °C.

(Calcination) The obtained hydroxide particles were mixed with lithium hydroxide in an equivalent ratio of 1.05 with respect to the hydroxide, and then heated under an oxygen atmosphere at a rate of 2.5 °C/min, followed by calcination at 780 °C for 9 hours to produce a lithium composite metal oxide having a uniform oriented structure.

### Example 2: Use of 10% Sodium Sulfate Additive

Except that sodium sulfate was introduced in an amount of 10 parts by weight per 100 parts by weight of water in the preparation of the reaction mother liquor, the procedure was the same as in Example 1 to manufacture the positive electrode active material precursor and the positive electrode active material.

### Comparative Example: No Sodium Sulfate Additive

Except that sodium sulfate was not introduced in the preparation of the reaction mother liquor, the procedure was the same as in Example 1 to manufacture the positive electrode active material precursor and the positive electrode active material.

### Experimental Example 1: SEM Image Evaluation

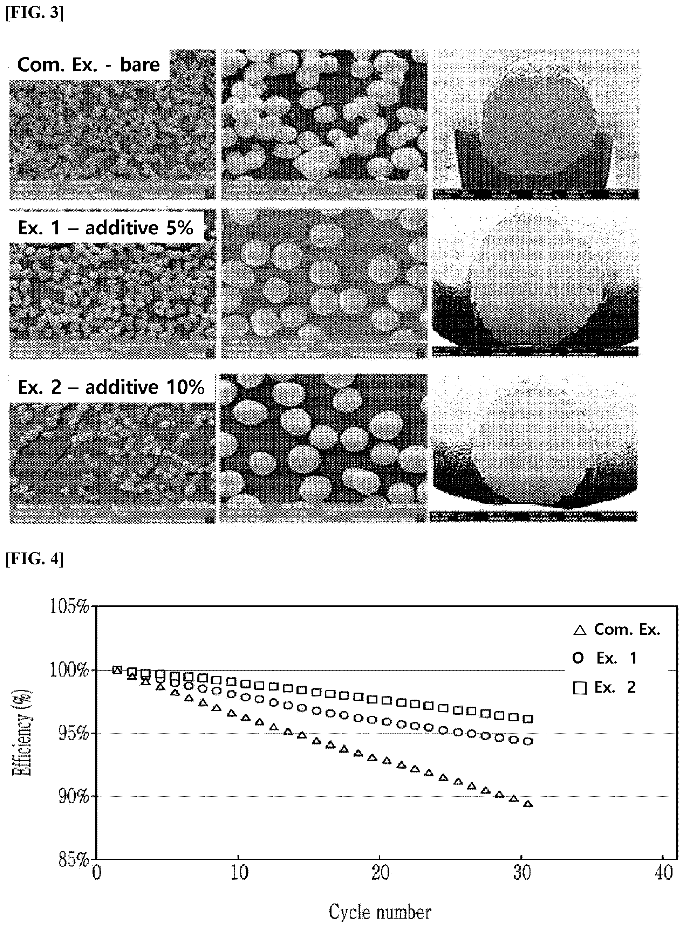

FIG. 3 shows cross-sectional SEM images of the precursors manufactured by the above methods.

SEM analysis revealed that in the comparative example without the additive, particles were not aggregated in the early stage of the reaction and remained dispersed. In the later stage of the reaction, the grown particles merged, resulting in poor sphericity, and cross-sectional analysis confirmed that orientation was not formed.

In contrast, in the examples employing the additive, unit seeds aggregated in the early stage of the reaction, and the final products exhibited significantly improved sphericity. Cross-sectional particle analysis confirmed that orientation was well formed.

### Experimental Example 2: Evaluation of Electrochemical Properties of Batteries

(Manufacture of Lithium Secondary Battery) For each of Examples 1 and 2 and the Comparative Example, the respective positive electrode active material was mixed with Super C as a conductive agent and PVDF as a binder at a weight ratio of 96.5:1.5:2 to prepare a positive electrode active material slurry. The slurry was uniformly coated onto an aluminum foil with a thickness of 20 µm, and vacuum-dried at 130 °C to fabricate a positive electrode.

Coin cells were assembled using the fabricated positive electrode as the working electrode, lithium foil as the counter electrode, a polypropylene film as the separator, and an electrolyte prepared by dissolving 1.0 M LiPF₆ in an EC/EMC/DMC solvent mixture.

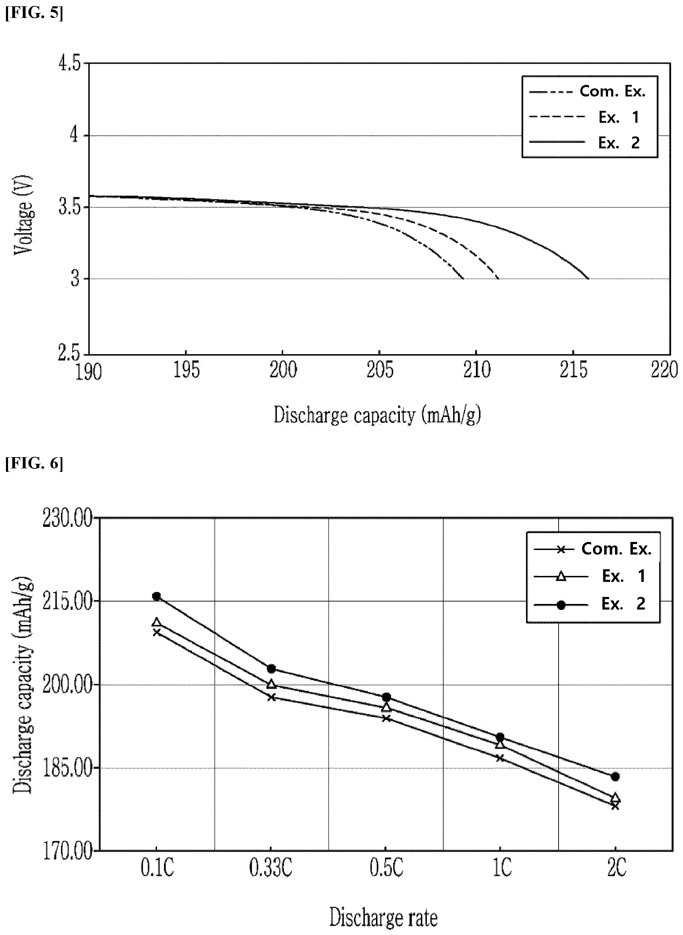

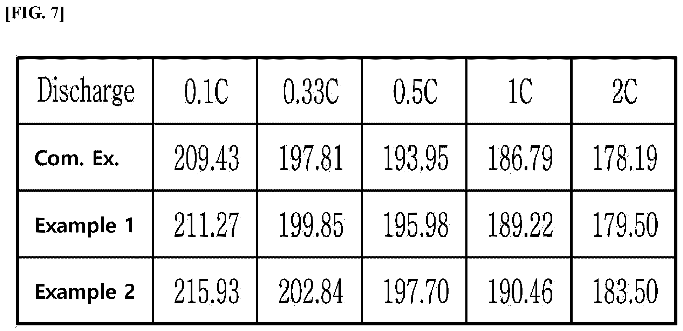

The fabricated lithium secondary batteries were evaluated for charge-discharge efficiency during cycling, initial discharge capacity, and initial discharge capacity at rates of 0.1C, 0.33C, 0.5C, 1C, and 2C. The results are shown in FIGS. 4 to 7.

As shown in FIGS. 4 to 7, in Examples 1 and 2, where an appropriate amount of colloidal flocculant was added, the charge-discharge efficiency during cycling, initial discharge capacity, and high-rate performance were all significantly improved compared to the Comparative Example without the colloidal flocculant. This improvement is interpreted as resulting from enhanced particle aggregation and orientation of the active material, thereby improving battery performance.

The present invention is not limited to the foregoing examples and may be implemented in various other forms, and it will be understood by those skilled in the art that other specific forms can be practiced without changing the technical spirit or essential characteristics of the present invention. Therefore, the above-described embodiments are to be understood as illustrative in all respects and not as restrictive.

## Claims

1. A method for manufacturing a precursor for a lithium secondary battery, comprising: preparing a metal raw material; and forming a reaction solution comprising the metal raw material to coprecipitate a metal hydroxide precursor, wherein the reaction solution further comprises an additive, and the additive comprises a colloidal flocculant.

2. The method for manufacturing a precursor for a lithium secondary battery of claim 1, wherein the precursor obtained according to the manufacturing method has lithium migration paths formed radially from a particle center to impart orientation.

3. The method for manufacturing a precursor for a lithium secondary battery of claim 1, wherein in the step of preparing the metal raw material, the reaction is carried out using a single metal raw material without separately preparing a core metal raw material and a shell metal raw material.

4. The method for manufacturing a precursor for a lithium secondary battery of claim 1, further comprising, after the step of forming a reaction solution comprising the metal raw material to coprecipitate a metal hydroxide precursor, separating the obtained precursor from waste liquid, wherein the separated waste liquid is used in place of the additive.

5. The method for manufacturing a precursor for a lithium secondary battery of claim 1, further comprising, after the step of forming a reaction solution comprising the metal raw material to coprecipitate a metal hydroxide precursor, separating the obtained precursor from waste liquid, wherein the separated waste liquid is introduced into the coprecipitation reaction together with the additional additive.

6. The method for manufacturing a precursor for a lithium secondary battery of claim 4 or 5, wherein the waste liquid comprises Na₂SO₄.

7. The method for manufacturing a precursor for a lithium secondary battery of claim 1, wherein the colloidal flocculant comprises an inorganic salt having a valence of 1 to 3.

8. The method for manufacturing a precursor for a lithium secondary battery of claim 7, wherein the colloidal flocculant comprises sodium nitrate, potassium nitrate, ammonium nitrate, sodium sulfate, sodium pyrosulfate, potassium pyrosulfate, ammonium pyrosulfate, potassium sulfate, ammonium sulfate, sodium phosphate, potassium phosphate, ammonium phosphate, sodium pyrophosphate, potassium pyrophosphate, ammonium pyrophosphate, or a combination thereof.

9. The method for manufacturing a precursor for a lithium secondary battery of claim 1, wherein the colloidal flocculant reduces the surface charge of nuclei generated during the coprecipitation reaction to cause particle agglomeration.

10. The method for manufacturing a precursor for a lithium secondary battery of claim 1, wherein the manufactured precursor is a layered precursor comprising nickel, manganese, and cobalt.
